# EUROPEAN PATENT SPECIFICATION

(11) **EP 3 245 545 B1**
(45) Date of publication and mention of the grant of the patent: **09.09.2020**
(21) Application number: 16701397.8
(22) Date of filing: 14.01.2016
(51) Int. Cl.: G02B 6/38

(54) **FIBER OPTIC CONNECTOR WITH STRAIN RELIEF ASSEMBLY**
FASEROPTISCHER STECKER MIT ZUGENTLASTUNGSANORDNUNG
CONNECTEUR DE FIBRE OPTIQUE AVEC ENSEMBLE ANTI-TRACTION

(30) Priority: 15.01.2015 US 201562103644 P
(43) Date of publication of application: 22.11.2017
(73) Proprietor: Corning Optical Communications LLC, Charlotte, NC 28216 (US)
(72) Inventor: THEUERKORN, Thomas, Hickory, NC 28601 (US)
(74) Representative: Epping - Hermann - Fischer
(86) International application number: PCT/US2016/013315
(87) International publication number: WO 2016/115288

(56) References cited:
- WO-A2-2012/125840
- JP-A- 2006 259 631
- US-A- 5 329 603
- US-A1- 2001 012 428
- US-A1- 2012 301 085

## Description

### PRIORITY APPLICATION

This application claims the benefit of priority of U.S. Provisional Application Serial No. 62/103,664, filed on January 15, 2015.

### BACKGROUND

This disclosure relates generally to optical connectivity, and more particularly to fiber optic connectors having strain relief assemblies.

Optical fibers are useful in a wide variety of applications, including the telecommunications industry for voice, video, and data transmissions. In a telecommunications system that uses optical fibers, there are typically many locations where fiber optic cables that carry the optical fibers connect to equipment or other fiber optic cables. To conveniently provide these connections, fiber optic connectors are often provided on the ends of fiber optic cables. The process of terminating individual optical fibers from a fiber optic cable is referred to as "connectorization." Connectorization can be done in a factory, resulting in a "pre-connectorized" or "pre-terminated" fiber optic cable, or the field (e.g., using a "field-installable" fiber optic connector).

Regardless of where installation occurs, a fiber optic connector typically includes a ferrule with one or more bores that receive one or more optical fibers. The ferrule supports and positions the optical fiber(s) with respect to a housing of the fiber optic connector. Thus, when the housing of the fiber optic connector is mated with another connector (e.g., in an adapter), an optical fiber in the ferrule is positioned in a known, fixed location relative to the housing. This allows an optical connection to be established when the optical fiber is aligned with another optical fiber provided in the mating connector.

The housing and connector bodies (e.g., a retention/crimp body) of a fiber optic connector are often relatively rigid components so that the fiber optic connector can withstand a variety of forces during handling and use without affecting the optical connection that may be or has been established. Having a rigid components, however, presents design challenges elsewhere. For example, fiber optic cables upon which fiber optic connectors are installed are typically much less rigid than the connector bodies of the fiber optic connectors. The rapid transition from high stiffness to low stiffness may result in stress concentrations where the cable meets the connector body. Radial loads applied to the cable may then result in the cable bending (e.g., where the stresses are concentrated) beyond a minimum bend radius that must not be exceeded for the cable to function properly.

To address the above-mentioned challenge, a fiber optic connector typically includes a a flexible, strain-relieving boot that snaps onto a rigid portion of the fiber optic connector (e.g., the housing or connector body) and extends rearwardly over a portion of the cable. The boot provides a transition in stiffness between the fiber optic connector and the cable. Although many different boot designs have been proposed to properly provide this transition, new solutions are still desired. It can be difficult to address conflicting conditions at opposite ends of the boot, namely a high stiffness at the end of the boot coupled to the connector and a low stiffness at the end of the boot terminating on the cable. Failure to do so may result in stress concentration points that weaken the boot or otherwise still lead to unacceptable bending of the cable. A fiber optic connector with strain relief according to the prior art is disclosed in US5329603. Existing solutions may not adequately address these conflicting conditions, manufacturability challenges, space constraints, and other considerations.

### SUMMARY

Embodiments of a fiber optic connector are disclosed below. According to one embodiment, a fiber optic connector includes a ferrule configured to support at least one optical fiber, a ferrule holder from which the ferrule extends, a housing in which the ferrule holder is received, and a connector body coupled to the housing. The connector body is configured to retain the ferrule holder within the housing. Additionally, the connector body has a front portion at least partially received in the housing and a rear portion at least partially outside of the housing. The fiber optic connector further includes a strain relief assembly comprising a support and a boot. The support is coupled to the rear portion of the connector body and includes a first portion defining a front end of the support, a second portion defining a back end of the support, and a transition region between the first and second portions. The second portion has a stiffness less than the first portion. The boot is received over the first portion of the support and extends rearwardly over the transition region and second portion. The support and boot are formed from respective first and second materials, with the second material being less rigid than the first material.

According to another embodiment, a fiber optic connector includes a ferrule configured to support at least one optical fiber, a ferrule holder from which the ferrule extends, a housing in which the ferrule holder is received, and a connector body coupled to the housing. The connector body is configured to retain the ferrule holder within the housing. Additionally, the connector body has a front portion at least partially received in the housing and a rear portion at least partially outside of the housing. The fiber optic connector further includes a strain relief assembly comprising a support coupled to the rear portion of the connector body and a boot received over support and extending rearwardly therefrom. The support and boot are formed from respective first and second materials, with the second material being less rigid than the first material. Additionally, the support includes at least one rib extending through a wall of the boot.

According to yet another embodiment, a fiber optic connector includes a ferrule configured to support at least one optical fiber, a ferrule holder from which the ferrule extends, a housing in which the ferrule holder is received, and a connector body coupled to the housing, and a shroud received over the housing and the connector body. The connector body is configured to retain the ferrule holder within the housing. Additionally, the connector body has a front portion at least partially received in the housing and a rear portion at least partially outside of the housing. The fiber optic connector further includes a strain relief assembly comprising a support coupled to the rear portion of the connector body and a boot received over support and extending rearwardly therefrom. The support includes a first portion and second portion, with the first portion defining a front end of the support and at least a first quarter of the support, and the second portion defining a back end of the support an at least a last quarter of the support. The second portion has a stiffness less than the first portion. A portion of the boot is positioned between the first portion of the support and the shroud. The support and boot are formed from respective first and second materials, with the second material being less rigid than the first material.

Embodiments of fiber optic cable assemblies are also provided below. The fiber optic cable assemblies include a fiber optic cable having at least one optical fiber. The fiber optic cable assemblies also include one of the fiber optic connectors disclosed herein installed on the fiber optic cable.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 a perspective view of an example of a fiber optic connector;
Fig. 2 is an exploded perspective view the fiber optic connector of Fig. 1;
Fig. 3 is cross-sectional elevation view the fiber optic connector of Fig. 1 installed onto a fiber optic cable;
Fig. 4 is an exploded perspective view of a connector body, crimp band, and strain relief assembly for the fiber optic connector of Fig. 1;
Fig. 5 is a perspective view similar to Fig. 1, but additionally showing the strain relief assembly of Fig. 4 exploded from the fiber optic connector;
Fig. 6 is an exploded perspective of the strain relief assembly of Fig. 4; and
Fig. 7 is a perspective view, partially in cross-section, of the fiber optic connector of Fig. 1 including the strain relief assembly of Fig. 4 and a shroud.

### DETAILED DESCRIPTION

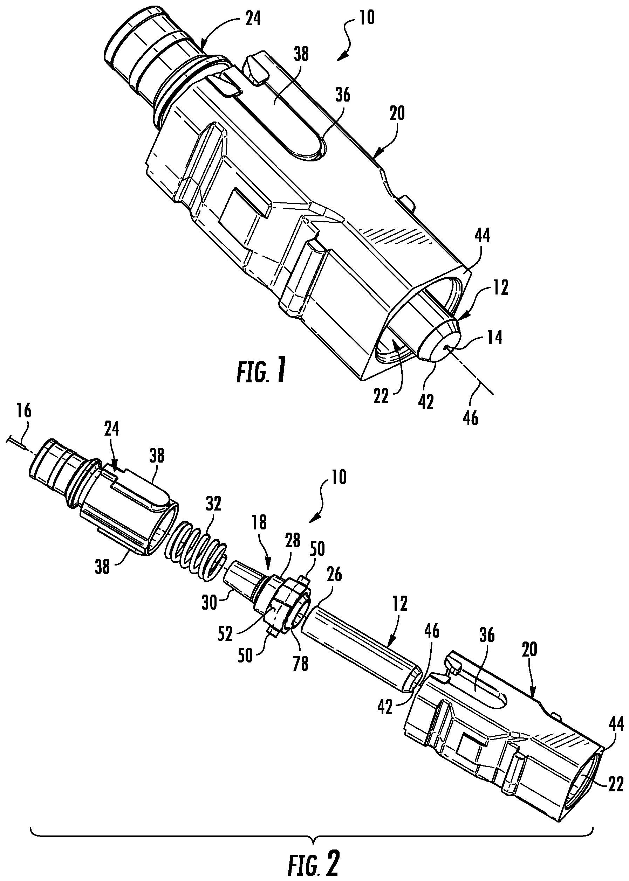

Various embodiments will be further clarified by examples in the description below. In general, the description relates fiber optic connectors and cable assemblies including the same. One example of a fiber optic connector 10 (also referred to as "optical connector 10", or simply "connector 10") is shown in Fig. 1. Although the connector 10 is shown in the form of a SC-type connector, the features described below may be applicable to different connector designs. This includes ST, LC, FC, MU, and MPO-type connectors, for example, and other single-fiber or multi-fiber connector designs.

As shown in Figs. 1 and 2, the connector 10 includes a ferrule 12 having a ferrule bore 14 ("micro-hole") configured to support an optical fiber 16, a ferrule holder 18 from which the ferrule 12 extends, a housing 20 having a cavity 22 in which the ferrule holder 18 is received, and a connector body 24 (also referred to as "inner housing 24", "retention body 24", or "crimp body 24") configured to retain the ferrule holder 18 within the housing 20. More specifically, a back end 26 of the ferrule 12 is received in a first portion 28 of the ferrule holder 18 and is secured therein in a known manner (e.g., press-fit, adhesive, molding the ferrule holder 18 over the back end 26 of the ferrule 12, etc.). The ferrule 12 and ferrule holder 18 may even be a monolithic structure in some embodiments. For convenience, the term "ferrule assembly" may be used to refer to the combination of the ferrule 12 and ferrule holder 18, regardless of whether these elements are separate components secured together or different portions of a monolithic structure.

The ferrule holder 18 is biased to a forward position within the housing 20 by a spring 32, which extends over a second portion 30 of the ferrule holder 18 that has a reduced cross-sectional diameter/width compared to the first portion 28. The spring 32 also interacts with internal geometry of the connector body 24, which may be secured to the housing 20 using a snap-fit or the like. For example, Figs. 1 and 2 illustrate a rear portion of the housing 20 having cut-outs or slots 36 on opposite sides so as to define a split shroud. The connector body 24 has tabs 38 configured to to be snapped into the slots 36 and retained therein due to the geometries of the components.

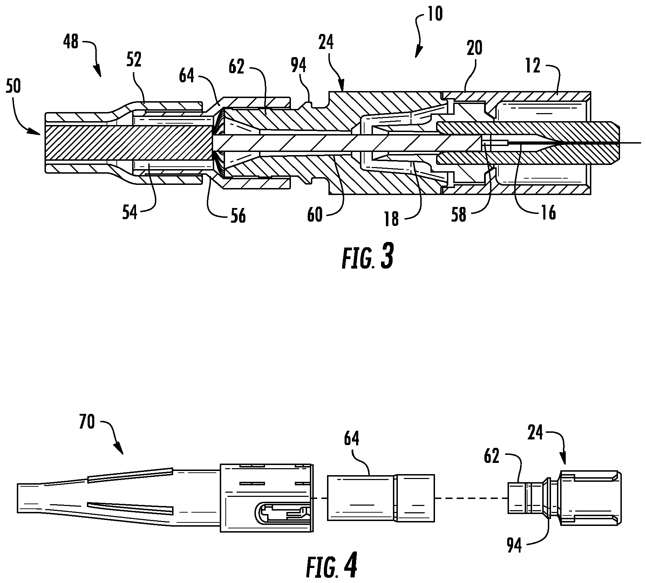

When the connector 10 is assembled as shown in Fig. 1, a front end 42 of the ferrule 12 projects beyond a front end 44 of the housing 20. The front end 42 presents the optical fiber 16 for optical coupling with a mating component (e.g., another fiber optic connector; not shown). Note that the ferrule 12 aligns the optical fiber 16 along a longitudinal axis 46. These aspects can be better appreciated with reference to Fig. 3, which shows how a fiber optic cable 50 (hereinafter "cable 50") including the optical fiber 16 can be terminated with the connector 10. In other words, the connector 10 can be installed on the cable 50 to form a fiber optic cable assembly 48. The cable 50 is merely an example to facilitate discussion. In the embodiment shown, the fiber cable 50 includes an outer jacket 52, inner jacket 54, strength members 56 in the form of aramid yarn, and the optical fiber 16, which itself has a coating 58 and a buffer layer 60 ("tight buffer"). Portions of the outer jacket 52 and inner jacket 54 have been removed from the optical fiber 16 to expose the strength members 56, which are cut to a desired length and placed over a rear portion 62 of the connector body 24. The strength members 56 are coupled to the connector body 24 by a crimp band 64 (also referred to as "crimp ring") that has been positioned over the optical fiber 16 and a portion of the strength members 56 and inner jacket 54. Again, the cable 50 is merely an example, as persons skilled in optical connectivity will appreciate how different cable designs maybe terminated with the connector 10.

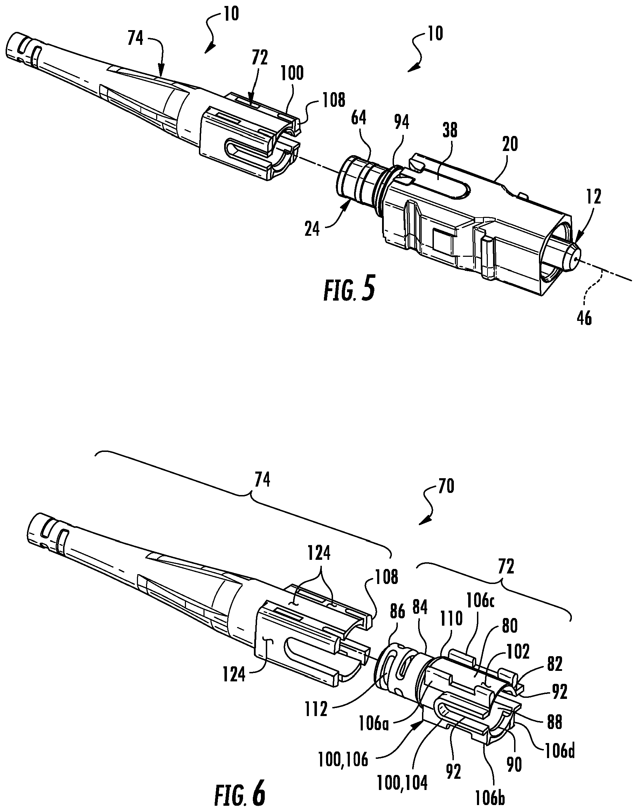

In Fig. 4, the connector body 24 and crimp band 64 are shown in isolation with a strain relief assembly 70 of the connector 10. In Fig. 5, the strain relief assembly 70 is shown exploded from the connector 10 (with the crimp band 64 and cable 50 not shown for clarity). The strain relief assembly 70 is positioned over the crimp band 64 and coupled to the connector body 24 when the connector 10 is assembled. More specifically, and with additional reference to Fig. 6, the strain relief assembly 70 includes a support 72 configured to be coupled to the rear portion 62 of the connector body 24 and a boot 74 received over the support 72. The support 72 and boot 74 are formed from respective first and second materials, with the second material being less rigid than the first material. For example, in some embodiments the second material may be an elastomer, such as thermoplastic polyurethane, and the first material may be something having a higher modulus of elasticity and/or shear modulus, such as a polycarbonate or metal. The advantages of such an arrangement will be apparent after further describing other aspects of the strain relief assembly 70 below.

Referring specifically to Fig. 6, the support 72 includes a first portion 80 defining a front end 82 of the support 72 and a second portion 84 defining a back end 86 of the support 72. A passage 88 extends through the support 72 between the front end 82 and back end 86. The first portion 80 represents at least the first quarter of the support 72 in some embodiments, or at least the first third, first half, or first two-thirds of the support 72 in some embodiments. To this end, the first portion 80 is configured to be coupled to the rear portion 62 of the connector body 24. One way in which the coupling may be achieved is by designing the dimensions and geometries of the support 72 and connector body 24 to provide a snap-fit connection. For example, the embodiment shown in the figures includes inwardly-extending latches or ridges 90 in the passage 88 adjacent the front end 82 of the support 72. Slots 92 extending rearwardly from the front end 82 are provided on opposite sides of the first portion 80. The slots 92 facilitate the first portion 80 flexing outwardly so that the latches 90 can be moved over a ridge 94 (Figs. 3-5) on the rear portion 64 of the connector body 24. The relationship between the ridge 94 and latches 90 helps retain the support 72 (and, therefore, strain relief assembly 70) on the connector body 24 under normal loads.

The first portion 80 of the support 72 further includes at least one rib 100 (also referred to as a "fin") on an outer surface 102 of the support 72. Two types of ribs 100 are provided in the embodiment shown. First, walls 104 on the support 70 that border the slots 92 maybe considered ribs. Second, projections 106 on the outer surface 102 that do not border the slots 92 may be considered ribs. Four projections 106 are shown in this example: first and second projections 106a, 106b on the side of the first portion including one of the slots 92, and third and fourth projections 106c, 106d on the side of the first portion including the other slot 92. The projections 106 are generally planar and aligned (e.g., the first and second projections 106a, 106b are co-planar, as are the third and fourth projections 106c, 106d) or parallel to each other (e.g., the first and second projections 106a, 106b are parallel with the third and fourth projections 106c, 106d). Other embodiments may include only one or more walls 104 or only one more projections 106 as the one or more ribs 100, and the ribs need not be aligned and/or parallel when multiple ribs are provided in some embodiments. As will be described in greater detail below, the ribs 100 extend through a wall 108 of the boot 74 when the boot 74 is received over the support 72.

Still referring to Fig. 6, the second portion 84 of the support 72 has a different geometry than the first portion 80. As such, a transition region or portion 110 is defined between the first and second portions 80, 84. The second portion 84 has a stiffness less than the first portion 80, which may be achieved by making the second portion 84 shorter in length and/or smaller in diameter/width than the first portion 80. Additionally, the second portion 84 may include structural features along its length that result in lower stiffness than the first portion 80. For example, the second portion 84 in the embodiment shown is cylindrical, aligned with the longitudinal axis 46 (Fig. 1), and has a plurality of lateral openings 112 along its length. The lateral openings 112 extend in a circumferential direction in the embodiment shown so as to comprise circumferentially-extending slots in the second portion 84. To this end, the second portion 84 appears "segmented". Other shapes and configurations are possible, however. Indeed, in alternative embodiments, the second portion 84 may not have any lateral openings or only have a single lateral opening extending circumferentially and/or axially.

Now referring to both Figs. 5 and 6, the boot 74 is substantially longer than (e.g., at least twice the length of) the support 72 and similarly includes at least two portions having different geometries. At least a portion of the boot that is received over the first portion 80 of the support 72 has a rectangular or substantially rectangular profile when viewed along the longitudinal axis 46. The boot 74 also extends rearwardly from the support 72 and eventually terminates with a circular or substantially circular profile when viewed along the longitudinal axis 46. Accordingly, the boot 74 transitions from the rectangular or substantially rectangular profile to the circular or substantially circular profile as the boot 74 extends rearwardly from the first portion 80 of the support 72.

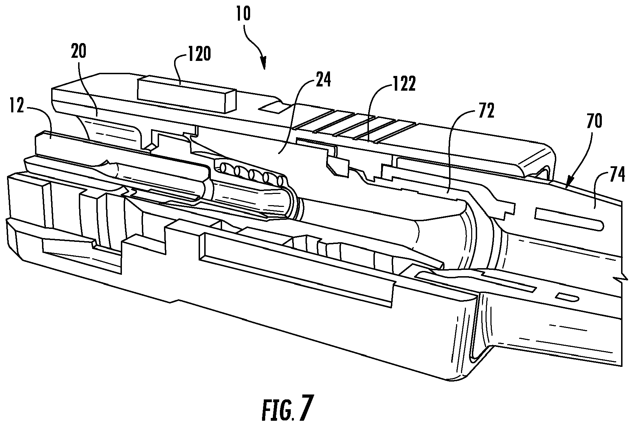

The boot 74 may be over-molded onto the support 72 to be received thereon, although other methods of assembly will be appreciated. Advantageously, and as mentioned above, the rib(s) 100 on the first portion 80 of the support 72 extend through a wall 108 of the boot 74 at one or more locations. This can be better appreciated with reference to Fig. 7, which illustrates the connector 10 in an assembled condition and partially in cross-section. As shown in Fig. 7, the connector 10 may further include a shroud 120 received over the housing 20, connector body 24, and at least a portion of the strain relief assembly 70. The shroud 120 in the particular embodiment shown extends over the entire first portion 80 of the support 72 and, therefore, the portion of the boot 74 that is received over the first portion 80. The boot 74 extends from the front end 82 of the support and rearwardly over the first portion 80 in the embodiment shown, but other arrangements are possible. For example, the boot 74 may be received only over at least 75% of the first portion 80 of the support 72 in some embodiments, or only over at least 50% of the first portion 80 in some embodiments. Regardless, at least a portion of the boot 74 is positioned between the first portion 80 of the support 72 and the shroud 120. Inner surfaces 122 of the shroud 120 confront the outer surfaces 124 (Fig. 6) of the boot 74. Each rib 100 on the first portion 80 of the support 72 extends through the wall 108 of the boot 74 toward one of the inner surfaces 122. In some embodiments, the ribs 100 may even contact the associated inner surface 122 of the shroud 120.

By extending to or beyond an outer surface of the boot 74, the ribs 100 allow forces to be effectively transferred to the shroud 120 during use. For example, when a radial/side load is applied to the cable 50 (Fig. 3), the coupling between the strain relief assembly 70 and connector body 24 may experience less stress due to the force transfer to the shroud 120. This reduces the likelihood of the strain relief assembly 70 bending or otherwise deforming beyond an acceptable level (e.g., the minimum bend radius of the optical fiber 16).

Although the ribs 10 may be one feature that increases the support capability of the strain relief assembly 70 compared to conventional designs, on a more general level simply providing the strain relief assembly 70 with components formed from different materials-one being more rigid than the other-offers advantages with respect to stiffness. In particular, the rigid first material of the support 72 helps ensure that the portion of the strain relief assembly 70 that couples to the connector body 24 has a relatively high stiffness. This avoids a significant/sharp transition in stiffness between the connector body 24 and strain relief assembly 70, thereby reducing the concentration of stresses at the coupling when the cable 50 experiences side loads or other forces.

Moreover, the relatively high stiffness can be provided without sacrificing a smooth transition in stiffness at the other end of the strain relief assembly 70 between the end of the boot 74 and the cable 50. In other words, the strain relief assembly 70 is still able to transition to a sufficiently low stiffness in an acceptable amount of length due to its construction. The geometry of the support 72 is such that the second portion 84 has a lower stiffness than the first portion 80, thereby providing a transition in stiffness between the rigid material of the support 72 and the less rigid material of the boot 74. Thus, within the strain relief assembly 70 itself, the potential for stress concentrations due to sharp transitions in stiffness between the support 72 and boot 74 is reduced/minimized.

It should be noted that the above-mentioned advantages can each be provided without changing the spatial constraints of the strain relief assembly 70 and/or other components of the connector 10. For example, the shroud 120 of the connector 10 maybe a conventional shroud, and the strain relief assembly 70 may be comparable in size to a conventional, monolithic strain relief structure (e.g., an elastomeric boot alone). Over-molding the boot 74 onto the support 72 is one way to achieve this advantage. Regardless of how the boot 74 is received and retained on the support 72, a sufficient length of the boot 74 is positioned between the first portion 80 of the support 72 and the shroud 120 so that the overall length of the strain relief assembly 70 is not significantly increased, if at all, compared to conventional designs. In the embodiment described above, the boot 74 extends from the front end 82 of the support 72 and rearwardly over the first and second portions 80, 84. In other embodiments, the boot 74 maybe received over the support 72 to a lesser extent. For example, in some embodiments the boot 74 may only be received over at least 75% of the first portion 80, or only over at least 50% of the first portion 80.

The invention should be construed to include everything within the scope of the appended claims.

## Claims

1. A fiber optic connector (10), comprising:
a ferrule (12) configured to support at least one optical fiber (16);
a ferrule holder (18) from which the ferrule (12) extends;
a housing (20) in which the ferrule holder (18) is received;
a connector body (24) coupled to the housing (20) and configured to retain the ferrule holder (18) within the housing (20), the connector body (24) having a front portion at least partially received in the housing (20) and a rear portion (62) at least partially outside of the housing (20); and
a strain relief assembly (70), comprising:
a support (72) coupled to the rear portion (62) of the connector body (24), wherein the support (72) includes a first portion (80) defining a front end (82) of the support (72), a second portion (84) defining a back end (86) of the support (72), and a transition region (110) between the first and second portions (80, 84); and
a boot (74) received over the support (72), wherein the support (72) and boot (74) are formed from respective first and second materials, the second material being less rigid than the first material;
**characterized in that** the second portion (84) of the support (72) has a stiffness less than the first portion (80), and that the boot (74) is received over the first portion (80) of the support (72) and extends rearwardly over the transition region (110) and the second portion (84).

2. The fiber optic connector (10) of claim 1, wherein the second portion (84) of the support (72) is substantially cylindrical and includes at least one lateral opening (112).

3. The fiber optic connector (10) of claim 2, wherein the support (72) extends along a longitudinal axis of the fiber optic connector (10), and further wherein the at least one lateral opening (112) in the second portion (84) of the support (72) comprises a plurality of circumferentially-extending openings (112).

4. The fiber optic connector (10) of any of claims 1-3, wherein the first material comprises a polycarbonate or metal, and the second material comprises an elastomer.

5. The fiber optic connector (10) of any of claims 1-4, wherein the boot (74) is over-molded onto the first portion (80) of the support (72).

6. The fiber optic connector (10) of any of claims 1-5, wherein the first portion (80) of the support (72) includes at least one rib (100) extending through a wall (108) of the boot (74).

7. The fiber optic connector (10) of claim 6, further comprising:
a shroud (120) received over the housing (20), connector body (24), and at least a portion of the strain relief assembly (70), wherein the at least one rib (100) on the first portion (80) of the support (72) extends through the wall (108) of the boot (74) toward an inner surface (122) of the shroud (120).

8. The fiber optic connector (10) of claim 7, wherein the at least one rib (108) on the first portion (80) of the support (72) contacts the inner surface (122) of the shroud (120).

9. The fiber optic connector (10) of claim 8, wherein the at least one rib (108) comprises at least one planar projection extending from an outer surface (102) of the first portion (80) of the support (72).

10. The fiber optic connector (10) of any of claims 7-9, wherein the shroud (120) extends over a portion of the strain relief assembly (70) that includes the first portion (80) of the support (72) such that the entire first portion (80) is within the shroud (120).

11. The fiber optic connector (10) of any of claims 1-10, wherein the first portion (80) of the support (72) includes at least one slot (92) extending from the front end (82) of the support (72), and further wherein the first portion (80) of the support (72) is coupled to the connector body (24) by a snap-fit connection facilitated by the at least one slot (92).

12. The fiber optic connector (10) of claim 11, wherein the at least one slot (92) comprises opposed first and second slots (92).

13. The fiber optic connector (10) of any of claims 1-12, wherein the strain relief assembly (70) includes a passage (88) extending through the support (72) and boot (74), and further wherein an inner surface of the support (72) and inner surface of the boot (74) each define a portion of the passage (88).

14. The fiber optic connector (10) of any of claims 1-13, wherein at least a portion of the boot (74) that is received over the first portion (80) of the support (72) has a rectangular or substantially rectangular profile when viewed along a longitudinal axis of the fiber optic connector (20), and further wherein the boot (74) terminates with a circular or substantially circular profile when viewed along the longitudinal axis such that the boot (74) transitions from the rectangular or substantially rectangular profile to the circular or substantially circular profile as the boot (74) extends rearwardly from the first portion (80) of the support (72).

15. The fiber optic connector (10) of any of claims 1-14, wherein the boot (74) extends from the front end (82) of the support (72) and rearwardly over the first portion (80), transition region (110), and second portion (84).

16. The fiber optic connector (10) of any of claims 1-15, wherein the first portion (80) of the support (72) defines at least a first quarter of the support (72), and further wherein the second portion (84) of the support (72) defines at least a last quarter of the support (72).

17. The fiber optic connector (10) of any of claims 1-16, wherein the boot (74) is received over at least 50% of the first portion (80) of the support (72).

18. The fiber optic connector (10) of claim 17, wherein the boot (74) is received over at least 75% of the first portion (80) of the support (72).

19. A fiber optic cable assembly (48), comprising:
a fiber optic cable (50) having at least one optical fiber (16);
a fiber optic connector (10) according to any of claims 1-18 installed on the fiber optic cable (50).

## Patentansprüche

1. Glasfaser-Steckverbinder (10), umfassend:
eine Ferrule (12), die dazu eingerichtet ist, mindestens einen Lichtwellenleiter (16) zu tragen;
einen Ferrulenhalter (18), von dem aus sich die Ferrule (12) erstreckt;
ein Gehäuse (20), in dem der Ferrulenhalter (18) aufgenommen ist; einen Steckverbinderkörper (24), der mit dem Gehäuse (20) verbunden und dazu eingerichtet ist, den Ferrulenhalter (18) in dem Gehäuse (20) zurückzuhalten, wobei der Steckverbinderkörper (24) einen vorderen Abschnitt, der zumindest teilweise in dem Gehäuse (20) aufgenommen ist, und einen hinteren Abschnitt (62) aufweist, der sich zumindest teilweise außerhalb des Gehäuses (20) befindet; und
eine Zugentlastungsanordnung (70), umfassend:
einen Träger (72), der mit dem hinteren Abschnitt (62) des Steckverbinderkörpers (24) verbunden ist, wobei der Träger (72) einen ersten Abschnitt (80), der ein vorderes Ende (82) des Trägers (72) definiert, einen zweiten Abschnitt (84), der ein hinteres Ende (86) des Trägers (72) definiert, und einen Übergangsbereich (110) zwischen dem ersten und dem zweiten Abschnitt (80, 84) umfasst; und
ein Muffe (74), die über dem Träger (72) aufgenommen ist, wobei der Träger (72) und die Muffe (74) aus jeweiligen ersten und zweiten Materialien ausgebildet sind, wobei das zweite Material weniger steif als das erste Material ist;
**dadurch gekennzeichnet, dass** der zweite Abschnitt (84) des Trägers (72) eine geringere Steifigkeit als der erste Abschnitt (80) hat, und dadurch, dass die Muffe (74) über dem ersten Abschnitt (80) des Trägers (72) aufgenommen ist und sich nach hinten über den Übergangsbereich (110) und den zweiten Abschnitt (84) erstreckt.

2. Glasfaser-Steckverbinder (10) nach Anspruch 1, wobei der zweite Abschnitt (84) des Trägers (72) im Wesentlichen zylindrisch ist und mindestens eine seitliche Öffnung (112) umfasst.

3. Glasfaser-Steckverbinder (10) nach Anspruch 2, wobei sich der Träger (72) entlang einer Längsachse des faseroptischen Steckverbinders (10) erstreckt, und wobei ferner die mindestens eine seitliche Öffnung (112) im zweiten Abschnitt (84) des Trägers (72) eine Vielzahl von in Umfangsrichtung verlaufenden Öffnungen (112) umfasst.

4. Glasfaser-Steckverbinder (10) nach einem der Ansprüche 1 bis 3, wobei das erste Material ein Polycarbonat oder Metall umfasst und das zweite Material ein Elastomer umfasst.

5. Glasfaser-Steckverbinder (10) nach einem der Ansprüche 1 bis 4, wobei die Muffe (74) auf den ersten Abschnitt (80) des Trägers (72) aufgeformt ist.

6. Glasfaser-Steckverbinder (10) nach einem der Ansprüche 1 bis 5, wobei der erste Abschnitt (80) des Trägers (72) mindestens eine Rippe (100) umfasst, die sich durch eine Wand (108) der Muffe (74) erstreckt.

7. Glasfaser-Steckverbinder (10) nach Anspruch 6, ferner umfassend:
eine Hülle (120), die über dem Gehäuse (20), dem Steckverbinderkörper (24) und zumindest einem Abschnitt der Zugentlastungsanordnung (70) aufgenommen ist, wobei sich die mindestens eine Rippe (100) auf dem ersten Abschnitt (80) des Trägers (72) durch die Wand (108) der Muffe (74) in Richtung einer Innenfläche (122) der Hülle (120) erstreckt.

8. Glasfaser-Steckverbinder (10) nach Anspruch 7, wobei die mindestens eine Rippe (108) auf dem ersten Abschnitt (80) des Trägers (72) die Innenfläche (122) der Hülle (120) berührt.

9. Glasfaser-Steckverbinder (10) nach Anspruch 8, wobei die mindestens eine Rippe (108) mindestens einen flachen Ansatz umfasst, der sich von einer Außenfläche (102) des ersten Abschnitts (80) des Trägers (72) erstreckt.

10. Glasfaser-Steckverbinder (10) nach einem der Ansprüche 7 bis 9, wobei sich die Hülle (120) derart über einem Abschnitt der Zugentlastungsanordnung (70) erstreckt, der den ersten Abschnitt (80) des Trägers (72) umfasst, dass sich der gesamte erste Abschnitt (80) innerhalb der Hülle (120) befindet.

11. Glasfaser-Steckverbinder (10) nach einem der Ansprüche 1 bis 10, wobei der erste Abschnitt (80) des Trägers (72) mindestens einen Schlitz (92) umfasst, der sich vom vorderen Ende (82) des Trägers (72) erstreckt, und wobei ferner der erste Abschnitt (80) des Trägers (72) mit dem Steckverbinderkörper (24) durch eine Schnappverbindung verbunden ist, die durch den mindestens einen Schlitz (92) ermöglicht wird.

12. Glasfaser-Steckverbinder (10) nach Anspruch 11, wobei der mindestens eine Schlitz (92) entgegengesetzte erste und zweite Schlitze (92) umfasst.

13. Glasfaser-Steckverbinder (10) nach einem der Ansprüche 1 bis 12, wobei die Zugentlastungsanordnung (70) einen Durchgang (88) umfasst, der durch den Träger (72) und die Muffe (74) verläuft, und wobei ferner eine Innenfläche des Trägers (72) und eine Innenfläche der Muffe (74) jeweils einen Abschnitt des Durchgangs (88) definieren.

14. Glasfaser-Steckverbinder (10) nach einem der Ansprüche 1 bis 13, wobei zumindest ein Abschnitt der Muffe (74), der über dem ersten Abschnitt (80) des Trägers (72) aufgenommen ist, entlang einer Längsachse des Glasfaser-Steckverbinders (20) betrachtet einen rechteckigen oder im Wesentlichen rechteckigen Querschnitt aufweist, und wobei ferner die Muffe (74) mit einem kreisrunden oder im Wesentlichen kreisrunden Querschnitt, entlang der Längsachse betrachtet, endet, sodass die Muffe (74) von dem rechteckigen oder im Wesentlichen rechteckigen Querschnitt zu dem kreisrunden oder im Wesentlichen kreisrunden Querschnitt übergeht, wenn sich die Muffe (74) vom ersten Abschnitt (80) des Trägers (72) nach hinten erstreckt.

15. Glasfaser-Steckverbinder (10) nach einem der Ansprüche 1 bis 14, wobei sich die Muffe (74) vom vorderen Ende (82) des Trägers (72) und nach hinten über dem ersten Abschnitt (80), dem Übergangsbereich (110) und dem zweiten Abschnitt (84) erstreckt.

16. Glasfaser-Steckverbinder (10) nach einem der Ansprüche 1 bis 15, wobei der erste Abschnitt (80) des Trägers (72) mindestens ein erstes Viertel des Trägers (72) definiert und wobei ferner der zweite Abschnitt (84) des Trägers (72) mindestens ein letztes Viertel des Trägers (72) definiert.

17. Glasfaser-Steckverbinder (10) nach einem der Ansprüche 1 bis 16, wobei die Muffe (74) über mindestens 50% des ersten Abschnitts (80) des Trägers (72) aufgenommen ist.

18. Glasfaser-Steckverbinder (10) nach Anspruch 17, wobei die Muffe (74) über mindestens 75% des ersten Abschnitts (80) des Trägers (72) aufgenommen ist.

19. Glasfaserkabelanordnung (48), umfassend:
ein Glasfaserkabel (50) mit mindestens einem Lichtwellenleiter (16);
einen Glasfaser-Steckverbinder (10) nach einem der Ansprüche 1 bis 18, der auf das Glasfaserkabel (50) montiert ist.

## Revendications

1. Connecteur de fibre optique (10), comprenant :
une ferrule (12) configurée pour supporter au moins une fibre optique (16) ;
un porte-ferrule (18) à partir duquel la ferrule (12) s'étend ;
un logement (20) dans lequel le porte-ferrule (18) est reçu ; un corps de connecteur (24) couplé au logement (20) et configuré pour retenir le porte-ferrule (18) au sein du logement (20), le corps de connecteur (24) ayant une partie avant au moins partiellement reçue dans le logement (20) et une partie arrière (62) au moins partiellement à l'extérieur du logement (20) ; et
un ensemble réducteur de tension (70), comprenant :
un support (72) couplé à la partie arrière (62) du corps de connecteur (24), dans lequel le support (72) inclut une première partie (80) définissant une extrémité avant (82) du support (72), une deuxième partie (84) définissant une extrémité arrière (86) du support (72), et une région de transition (110) entre les première et deuxième parties (80, 84) ; et
une coiffe (74) reçue par-dessus le support (72), dans lequel le support (72) et la coiffe (74) sont formés de premier et deuxième matériaux respectifs, le deuxième matériau étant moins raide que le premier matériau ;
**caractérisé en ce que** la deuxième partie (84) du support (72) a une rigidité inférieure à la première partie (80), et **en ce que** la coiffe (74) est reçue par-dessus la première partie (80) du support (72) et s'étend vers l'arrière par-dessus la région de transition (110) et la deuxième partie (84).

2. Connecteur de fibre optique (10) selon la revendication 1, dans lequel la deuxième partie (84) du support (72) est sensiblement cylindrique et inclut au moins une ouverture latérale (112).

3. Connecteur de fibre optique (10) selon la revendication 2, dans lequel le support (72) s'étend le long d'un axe longitudinal du connecteur de fibre optique (10), et dans lequel en outre l'au moins une ouverture latérale (112) dans la deuxième partie (84) du support (72) comprend une pluralité d'ouvertures s'étendant circonférentiellement (112).

4. Connecteur de fibre optique (10) selon l'une quelconque des revendications 1 à 3, dans lequel le premier matériau comprend un polycarbonate ou métal, et le deuxième matériau comprend un élastomère.

5. Connecteur de fibre optique (10) selon l'une quelconque des revendications 1 à 4, dans lequel la coiffe (74) est surmoulée sur la première partie (80) du support (72).

6. Connecteur de fibre optique (10) selon l'une quelconque des revendications 1 à 5, dans lequel la première partie (80) du support (72) inclut au moins une nervure (100) s'étendant à travers une paroi (108) de la coiffe (74).

7. Connecteur de fibre optique (10) selon la revendication 6, comprenant en outre :
une enveloppe (120) reçue par-dessus le logement (20), le corps de connecteur (24), et au moins une partie de l'ensemble réducteur de tension (70), dans lequel l'au moins une nervure (100) sur la première partie (80) du support (72) s'étend à travers la paroi (108) de la coiffe (74) en direction d'une surface interne (122) de l'enveloppe (120).

8. Connecteur de fibre optique (10) selon la revendication 7, dans lequel l'au moins une nervure (108) sur la première partie (80) du support (72) vient en contact avec la surface interne (122) de l'enveloppe (120).

9. Connecteur de fibre optique (10) selon la revendication 8, dans lequel l'au moins une nervure (108) comprend au moins une saillie plane s'étendant d'une surface externe (102) de la première partie (80) du support (72).

10. Connecteur de fibre optique (10) selon l'une quelconque des revendications 7 à 9, dans lequel l'enveloppe (120) s'étend par-dessus une partie de l'ensemble réducteur de tension (70) qui inclut la première partie (80) du support (72) de sorte que la première partie entière (80) est à l'intérieur de l'enveloppe (120).

11. Connecteur de fibre optique (10) selon l'une quelconque des revendications 1 à 10, dans lequel la première partie (80) du support (72) inclut au moins une fente (92) s'étendant à partir de l'extrémité avant (82) du support (72), et dans lequel en outre la première partie (80) du support (72) est couplée au corps de connecteur (24) par une connexion par encliquetage facilitée par l'au moins une fente (92).

12. Connecteur de fibre optique (10) selon la revendication 11, dans lequel l'au moins une fente (92) comprend des première et deuxième fentes opposées (92).

13. Connecteur de fibre optique (10) selon l'une quelconque des revendications 1 à 12, dans lequel l'ensemble réducteur de tension (70) inclut un passage (88) s'étendant à travers le support (72) et la coiffe (74), et dans lequel en outre une surface interne du support (72) et la surface interne de la coiffe (74) définissent chacune une partie du passage (88).

14. Connecteur de fibre optique (10) selon l'une quelconque des revendications 1 à 13, dans lequel au moins une partie de la coiffe (74) qui est reçue par-dessus la première partie (80) du support (72) a un profil rectangulaire ou sensiblement rectangulaire lorsqu'on observe le long d'un axe longitudinal du connecteur de fibre optique (20), et dans lequel en outre la coiffe (74) se termine par un profil circulaire ou sensiblement circulaire lorsqu'on observe le long de l'axe longitudinal de sorte que la coiffe (74) passe du profil rectangulaire ou sensiblement rectangulaire au profil circulaire ou sensiblement circulaire à mesure que la coiffe (74) s'étend vers l'arrière à partir de la première partie (80) du support (72).

15. Connecteur de fibre optique (10) selon l'une quelconque des revendications 1 à 14, dans lequel la coiffe (74) s'étend à partir de l'extrémité avant (82) du support (72) et vers l'arrière par-dessus la première partie (80), la région de transition (110), et la deuxième partie (84).

16. Connecteur de fibre optique (10) selon l'une quelconque des revendications 1 à 15, dans lequel la première partie (80) du support (72) définit au moins un premier quartier du support (72), et dans lequel en outre la deuxième partie (84) du support (72) définit au moins un dernier quartier du support (72).

17. Connecteur de fibre optique (10) selon l'une quelconque des revendications 1 à 16, dans lequel la coiffe (74) est reçue par-dessus au moins 50 % de la première partie (80) du support (72).

18. Connecteur de fibre optique (10) selon la revendication 17, dans lequel la coiffe (74) est reçue par-dessus au moins 75 % de la première partie (80) du support (72).

19. Ensemble câble à fibres optiques (48), comprenant :
un câble à fibres optiques (50) ayant au moins une fibre optique (16);
un connecteur de fibre optique (10) selon l'une quelconque des revendications 1 à 18 installé sur le câble à fibres optiques (50).
